# EUROPÄISCHE PATENTSCHRIFT

(11) **EP 1 241 386 B1**
(45) Veröffentlichungstag und Bekanntmachung des Hinweises auf die Patenterteilung: **25.08.2004**
(21) Anmeldenummer: 01128963.4
(22) Anmeldetag: 06.12.2001
(51) Int. Cl.: F16K 27/00, B60T 8/36, F15B 13/00

(54) **Steuereinrichtung für Druckmittel**
Control device for pressure medium
Dispositif de commande pour fluide sous pression

(30) Priorität: 16.02.2001 DE 10107239
(43) Veröffentlichungstag der Anmeldung: 18.09.2002
(73) Patentinhaber: WABCO GmbH & CO. OHG, 30453 Hannover (DE)
(72) Erfinder: Frank, Dieter, 30171 Hannover (DE); Gründker, Oliver, 30900 Wedemark (DE); Homan, Peter, 31535 Neustadt (DE); Kranz, Andreas, Dr., 31515 Wunstorf (DE); Risse, Rainer, 30982 Pattensen (DE); Schreiber, Gerdt, 30916 Isernhagen (DE)
(74) Vertreter: Schrödter, Manfred

(56) Entgegenhaltungen:
- EP-A- 0 893 636
- DE-A- 19 619 968
- DE-A- 19 649 402
- US-A- 5 292 260
- US-A- 5 520 546

## Beschreibung

Die Erfindung betrifft eine Steuereinrichtung für Druckmittel gemäß dem Oberbegriff des Patentanspruchs 1.

Eine derartige Steuereinrichtung ist durch das Gerät Nr. 884 009 650 0 der Firma WABCO GmbH bekannt.

Die bekannte Steuereinrichtung weist ein erstes Gehäuseteil und ein zweites Gehäuseteil auf, die miteinander verbunden sind. Im ersten Gehäuseteil ist eine elektrisch steuerbare Ventileinrichtung angeordnet, die mittels einer im zweiten Gehäuseteil angeordneten Elektronik ansteuerbar ist. Zum elektrischen Verbinden der steuerbaren Ventileinrichtung mit der Elektronik dienen als Steckerbuchsen ausgebildete Negativteile und als Steckerstifte ausgebildete Positivteile, die nach dem Zusammenfügen der beiden Gehäuseteile zusammen eine elektrische Steckverbindung bilden.

Des weiteren ist aus der US-A-5 520 546 ein Ventilblockaggregat bekannt, welches ein erstes Gehäuseteil und ein zweites Gehäuseteil aufweist, die miteinander verbunden sind.Im ersten Gehäuseteil ist eine elektrisch steuerbare Ventileinrichtung angeordnet und im zweiten Gehäuseteil ist eine elektrische Einrichtung zum Ansteuern der elektrisch steuerbaren Ventileinrichtung angeordnet.Zum elektrischen Verbinden der im ersten Gehäuseteil angeordneten elektrisch steuerbaren Ventileinrichtung mit der im zweiten Gehäuseteil angeordneten elektrischen Einrichtung dienen als Steckerbuchsen ausgebildete Negativteile und als Steckerstifte ausgebildete Positivteile, die nach dem Zusammenfügen der beiden Gehäuseteile zusammen eine elektrische Steckverbindung bilden. Die Positivteile sind an der elektrisch steuerbaren Ventileinrichtung angeordnet. Die Negativteile sind den Positivteilen gegenüber an einem als elektrische Leiterplatte ausgebildeten plattenartigen Teil der elektrischen Einrichtung angeordnet. Im zweiten Gehäuseteil ist der Stirnwand des zweiten Gehäuseteiles gegenüber ein Bodenstück angeordnet. Das Bodenstück weist Hohlansätze auf, die sich in Richtung auf die Stirnwand des zweiten Gehäuseteiles zu erstrecken. Ebenso weist die Stirnwand Ansätze auf, die sich in Richtung auf das Bodenstück zu erstrecken. Die Leiterplatte ist zwischen den Ansätzen der Stirnwand und den Hohlansätzen des Bodenstückes eingespannt. Von den einander zugewandten Seiten der Leiterplatte und des Bodenstückes wird ein Raum zur Aufnahme zusätzlicher elektrischer Bauteile begrenzt. In diesen Raum erstrecken sich auch die an der Leiterplatte angeordneten Negativteile hinein. Das Bodenstück weist hohle Bodenstück-Ansätze auf, die sich auf die an der Leiterplatte angeordneten Negativteile zu erstrecken und diese schutzgebend übergreifen. Auf ihrer der Leiterplatte abgewandten Seite weist das Bodenstück koaxial zu den hohlen Bodenstück-Ansätzen angeordnete, sich in Richtung auf die Positivteile zu konisch erweiternde Einführungen auf. Diese Einführungen erleichtern beim Zusammenfügen der beiden Gehäuseteile das selbsttätige Verbinden der Negativteile mit den Positivteilen.

Der Erfindung liegt die Aufgabe zugrunde, eine Steuereinrichtung der eingangs erwähnten Art weiter zu verbessern, insbesondere die Ausbildung und die Anordnung der Steckverbindungsmittel der Steuereinrichtung.

Diese Aufgabe wird mit der im Patentanspruch 1 angegebenen Erfindung gelöst. Weiterbildungen und vorteilhafte Ausgestaltungen der Erfindung sind in den Unteransprüchen angegeben.

Die Erfindung bietet insbesondere den Vorteil, daß neben einer Verkürzung der Montagezeit auch die Lagegenauigkeit und die Festigkeit der elektrischen Steckverbindungsmittel erhöht wird.

Anhand der Zeichnung wird nachfolgend ein Ausführungsbeispiel der Erfindung näher erläutert.

Es zeigen:
- Fig. 1: eine zwei steuerbare Ventile aufweisende Steuereinrichtung für Druckmittel, deren elektrische Einrichtungen mittels elektrischer Steckverbindungsmittel miteinander verbindbar sind, und
- Fig. 2: einen Träger für die Negativteile der elektrischen Steckverbindungsmittel.

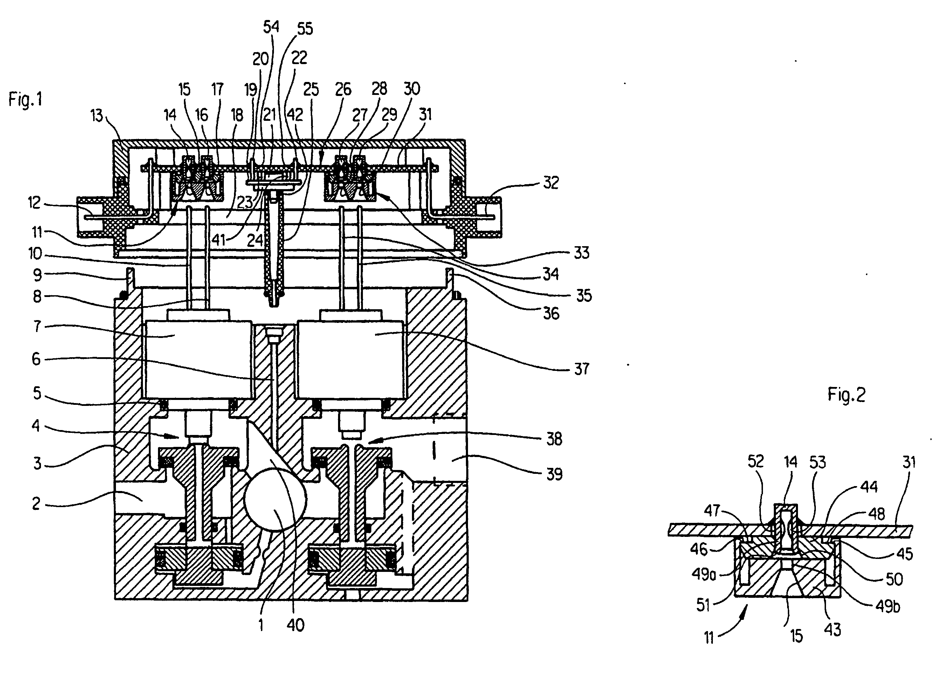

In Fig. 1 ist eine Steuereinrichtung für Druckmittel dargestellt, die ein aus einem ersten Gehäuseteil (3) und einem zweiten Gehäuseteil (13) bestehendes Gehäuse (3, 13) aufweist. Das erste Gehäuseteil (3) und das zweite Gehäuseteil (13) sind mittels nicht dargestellter Verbindungsmittel, wie z.B. Schrauben, lösbar miteinander verbindbar. Im ersten Gehäuseteil (3) ist eine Ventileinrichtung angeordnet, die aus einem Einlassventil (4) und einem Auslassventil (38) besteht. Zum Betätigen des Einlassventils (4) und des Auslassventils (38) dient eine erste elektrische Einrichtung, die von einem dem Einlassventil (4) zugeordneten ersten Elektromagneten (7) und einem dem Auslassventil (38) zugeordneten zweiten Elektromagneten (37) gebildet wird. Die beiden Elektromagneten (7, 37) sind durch eine Gehäusewand (5) vom Einlassventil (4) und vom Auslassventil (38) getrennt im ersten Gehäuseteil (3) angeordnet, wobei die mit dem Einlassventil (4) und dem Auslassventil (38) zusammenwirkenden bewegbaren Stellglieder der Elektromagneten (7, 37) durch in der Gehäusewand (5) angeordnete Durchgangsöffnungen hindurchgeführt sind. Zwischen den Elektromagneten (7, 37) und den die Durchgangsöffnungen begrenzenden Bereichen der Gehäusewand (5) sind Dichtelemente angeordnet. Das erste Gehäuseteil (3) ist auf diese Art und Weise als geschlossenes Gehäuse für das Einlassventil (4) und das Auslassventil (38) ausgebildet.

Das Einlassventil (4) und das Auslassventil (38) besitzen je eine Druckmitteleingangskammer und je eine Druckmittelausgangskammer. Die Druckmittelausgangskammer des Einlassventils (4) ist mit dem Bezugszeichen (40) versehen. Über einen Druckmitteleingang (2) ist die Druckmitteleingangskammer des Einlassventils (4) mit einer nicht dargestellten Druckmittelquelle, wie z.B. einem Druckluft-Vorratsbehälter, verbunden. Die Druckmittelausgangskammer (40) des Einlassventils (4) ist über einen Druckmittelausgang (1) mit einem nicht dargestellten Verbraucher, wie z.B. einem Bremszylinder einer Fahrzeugbremsanlage, verbunden. Die Druckmittteleingangskammer des Auslassventils (38) steht ebenfalls mit dem Druckmittelausgang (1) des Einlassventils (4) in Verbindung. Über einen Druckmittelauslass (39) ist die Druckmittelausgangskammer des Auslassventils (38) mit einer Druckmittelsenke, wie z.B. der Atmosphäre, verbunden. Das Einlassventil (4) weist einen zusätzlichen Druckmittelanschluss (6) auf, der von der Druckmittelausgangskammer (40) des Einlassventils (4) ausgeht und sich in Richtung auf das zweite Gehäuseteil (13) zuerstreckt.

In dem als Deckel für das Gehäuse (3, 13) dienenden zweiten Gehäuseteil (13) ist ein aus Kunststoff bestehender Rahmen (18) angeordnet, der als Träger für eine zweite elektrische Einrichtung (26) dient. An der dem zweiten Gehäuseteil (13) zugewandten Seite des ersten Gehäuseteiles (3) sind vier sich auf das zweite Gehäuseteil (13) zuerstreckende Vorsprünge (9, 36) so angeordnet, daß sie beim Zusammenfügen des ersten Gehäuseteiles (3) mit dem zweiten Gehäuseteil (13) mit der Innenseite des Rahmens (18) in Kontakt kommen. Die Vorsprünge (9, 36) dienen beim Zusammenfügen des ersten Gehäuseteiles (3) mit dem zweiten Gehäuseteil (13) zum Ausrichten der beiden Gehäuseteile (3,13) zueinander.

Jeder der beiden Elektromagneten (7, 37) weist mehrere elektrische Kontaktelemente auf, die sich in Richtung auf ein als Leiterplatte (31) ausgebildetes plattenartiges Bauteil der zweiten elektrischen Einrichtung (26) zuerstrecken. Die elektrischen Kontaktelemente sind als elastisch verformbare Steckerstifte ausgebildet, die als Positivteile (8, 10, 34, 35) einer elektrischen Steckverbindung dienen. An der den Positivteilen (8, 10, 34, 35) zugewandten Seite der Leiterplatte (31) sind ein erster Träger (11) und ein zweiter Träger (33) für elektrische Kontaktelemente angeordnet, welche topfförmig ausgebildet sind und als Negativteile (14, 16, 27, 29) für die elektrische Steckverbindung dienen. Die Träger (11, 33) für die Negativteile (14, 16, 27, 29) bestehen aus einem elektrisch nicht leitenden Werkstoff, wie z.B. Kunststoff.

Der erste Träger (11) besitzt den Positivteilen (8, 10) des ersten Elektromagneten (7) zugeordnete Durchgangsöffnungen (49a, 49b) -Fig. 2-, die in Richtung der Längsachse der Positivteile (8, 10) verlaufen. Jede dieser Durchgangsöffnungen weist auf ihrer der Leiterplatte (31) abgewandten Seite einen sich in Richtung auf das ihr zugeordnete Positivteil (8, 10) zu trichterförmig erweiternden Bereich auf. Der den sich trichterförmig erweiternden Bereich aufweisende Abschnitt der Durchgangsöffnung (49a, 49b) dient als Einführung (15, 17) für das Positivteil (8, 10). In dem Bereich jeder der Durchgangsöffnungen, an welchen der sich trichterförmig erweiternde Bereich anschließt, ist je eines der Negativteile (14, 16) angeordnet, derart, daß seine offene Seite an die Einführung (15, 17) anschließt. Der zweite Träger (33) besitzt den Positivteilen (34, 35) des zweiten Elektromagneten (37) zugeordnete Durchgangsöffnungen, die in Richtung der Längsachse der Positivteile (34, 35) verlaufen. Jede dieser Durchgangsöffnungen weist auf ihrer der Leiterplatte (31) abgewandten Seite einen sich in Richtung auf das ihr zugeordnete Positivteil (34, 35) zu trichterförmig erweiternden Bereich auf. Der den sich trichterförmig erweiternden Bereich aufweisende Abschnitt der Durchgangsöffnung dient als Einführung (28, 30) für das Positivteil (34, 35). In dem Bereich jeder der Durchgangsöffnungen, an welchen der sich trichterförmig erweiternde Bereich anschließt, ist je eines der Negativteile (27, 29) angeordnet, derart, daß es mit seiner offenen Seite an die Einführung (28, 30) anschließt. Die Länge jedes der Negativteile (14, 16, 27, 29) ist so bemessen, daß die Negativteile (14, 16, 27, 29) mit ihren verschlossenen Endbereichen so weit aus den Durchgangsöffnungen der Träger (11, 33) herausragen, daß sie sich ein Stück durch ihnen zugeordnete, im wesentlichen gleichachsig zu den Durchgangsöffnungen (49a, 49b) der Träger (11, 33) verlaufende Öffnungen (52) -Fig.2)- in der Leiterplatte (31) hindurcherstrecken, wenn die Träger (11, 33) mit ihrer den Positivteilen (8, 10, 34, 35) abgewandten Seite an der Leiterplatte (31) anliegen. Die Leiterplatte (31) ist über Steckerstifte (12, 32), die am Rahmen (18) angeordnet sind, mit externen elektrischen Einrichtungen verbindbar.

Im zweiten Gehäuseteil (13) ist ein Drucksensor (21) angeordnet, der über einen Druckmittelanschluss (42) und ein rohrförmiges Verbindungsteil (25) mit dem zusätzlichen Druckmittelanschluss (6) der Druckmittelausgangskammer (40) des Einlassventils (4) verbindbar ist. Der zusätzliche Druckmittelanschluss (6) und das diesem zugewandte Ende des Verbindungsteiles (25) sind so ausgebildet und so zueinander angeordnet, daß sie beim Zusammenfügen der beiden Gehäuseteile (3, 13) selbsttätig eine Druckmittel-Steckverbindung eingehen. Der Drucksensor (21) ist auf einem scheibenförmigen Träger (41) angeordnet, der aus einem elektrisch nicht leitenden Werkstoff, wie z.B. Kunststoff, besteht. Der Träger (41) besitzt in seinem Randbereich (19) als Stützen ausgebildete Anformungen (23, 24), die zum Abstützen des Trägers (41) an der Leiterplatte (31) dienen. Die Anformungen (23, 24) verlaufen im wesentlichen in Richtung der Längsachse des Trägers (41) und des Drucksensors (21) und erstrecken sich in Richtung auf die Leiterplatte (31) zu. Ebenfalls im Randbereich (19) des Trägers (41) angeordnet sind sich in Richtung auf die Leiterplatte (31) zuerstreckende stiftartige elektrische Kontaktelemente (20, 22). Die Länge der elektrischen Kontaktelemente (20, 22) ist so bemessen, daß jedes der elektrischen Kontaktelemente (20, 22) sich mit seinem freien Endbereich durch eine ihm zugeordnete Öffnung (54, 55) in der Leiterplatte (31) hindurcherstreckt, wenn der Träger (41) mit seinen Anformungen (23, 24) an der Leiterplatte (31) zur Anlage kommt, wobei jedes der elektrischen Kontaktelemente (20, 22) mit seinem freien Endbereich ein Stück aus der Öffnung (54, 55) herausragt. Die elektrischen Kontaktelemente (20, 22) stehen mit ihren direkt am oder im Träger (41) gelegenen Enden mit dem elektrischen Teil des Drucksensors (21) in Verbindung und sind mit ihren durch die Leiterplatte (31) hindurchgeführten Enden mit auf der Leiterplatte (31) angeordneten Leiterbahnen durch Löten verbunden.

Der Druckmittelanschluss (42) des Drucksensors (21) ist nicht direkt am Drucksensor (21) sondern auf der dem Drucksensor (21) abgewandten Seite des Trägers (41) am Träger (41) angeordnet.

Die Länge der Positivteile (8, 10, 34, 35) der elektrischen Steckverbindung und die Länge des Verbindungsteiles (25) für die Druckmittelverbindung sind so bemessen, daß beim Zusammenfügen des ersten Gehäuseteiles (3) mit dem zweiten Gehäuseteil (13) die Positivteile (8, 10, 34, 35) erst dann in die Einführungen (15, 17, 28, 30) der ihnen zugeordneten Negativteile (14, 16, 27, 29) und das Verbindungsteil (25) für die Druckmittelverbindung erst dann in eine Einführung des zusätzlichen Druckmittelanschlusses (6) eintauchen, wenn die Vorsprünge (9, 36) des ersten Gehäuseteiles (3) so weit in das zweite Gehäuseteil (13) eingetaucht sind, daß die beiden Gehäuseteile (3, 13) sich zueinander ausgerichtet haben. Nach dieser Grobzentrierung der beiden Gehäuseteile (3, 13) sind auch die Positivteile (8, 10, 34, 35) und die Negativteile (14, 16, 27, 29) der elektrischen Steckverbindung wenigstens annähernd gleichachsig zueinander ausgerichtet. Desgleichen haben das Verbindungsteil (25) und der zusätzliche Druckmittelanschluss (6) durch diese Grobzentrierung eine Ausrichtung erfahren, durch welche sie wenigstens annähernd gleichachsig einander gegenüberstehen.

Fig. 2 zeigt einen der beiden baugleichen Träger für die Negativteile der vorstehend beschriebenen elektrischen Steckverbindung.

Der besseren Übersicht halber sind die den in Fig. 1 gezeigten Bauteilen gleichen Bauteile mit gleichen Bezugszeichen versehen.

Der Träger (11) für die als Negativteile (14, 16) ausgebildeten elektrischen Kontaktelemente besteht aus einem ersten Trägerteil (43) und einem topfförmig ausgebildeten zweiten Trägerteil (44), die lösbar miteinander verbunden sind. Zum Verbinden des ersten Trägerteiles (43) mit dem zweiten Trägerteil (44) dienen zungenartige Anformungen (45, 46) des ersten Trägerteiles (43), die im wesentlichen parallel zur Längsachse des ersten Trägerteiles (43) und des zweiten Trägerteiles (44) verlaufend sich in Richtung auf das zweite Trägerteil (44) zuerstrecken. Die zungenartigen Anformungen (45, 46) besitzen je einen nasenförmigen Vorsprung. Die nasenförmigen Vorsprünge erstrecken sich quer zur Längsachse des ersten Trägerteiles (43) und des zweiten Trägerteiles (44) in Richtung auf das zweite Trägerteil (44) zu und greifen nach dem Zusammenfügen von erstem Trägerteil (43) und zweitem Trägerteil (44) in je eine ihnen zugeordnete stufenförmige Ausnehmung (47, 48) des zweiten Trägerteiles (44) ein. Das erste Trägerteil (43) und das zweite Trägerteil (44) liegen dann im wesentlichen mit ihren einander zugewandten Seiten aneinander an.

Der aus dem ersten Trägerteil (43) und dem zweiten Trägerteil (44) bestehende Träger (11) weist mehrere in Richtung seiner Längsachse verlaufende Durchgangsöffnungen auf, von denen in der Zeichnung der Einfachheit halber nur eine Durchgangsöffnung (49a, 49b) dargestellt ist. Die Trennstelle zwischen dem ersten Trägerteil (43) und dem zweiten Trägerteil (44) ist gleichzeitig die Trennstelle zwischen einem im zweiten Trägerteil (44) angeordneten ersten Abschnitt (49 a) und einem im ersten Trägerteil (43) angeordneten zweiten Abschnitt (49 b) der Durchgangsöffnung (49a, 49b). Der im ersten Trägerteil (43) angeordnete zweite Abschnitt (49 b) der Durchgangsöffnung (49a, 49b) weist die in Richtung auf das Positivteil (10) zu sich trichterförmig erweiternde Einführung (15) für das Positivteil (10) auf. Der Durchlaßquerschnitt der trichterförmigen Einführung (15) ist an seiner engsten Stelle gleich dem oder kleiner als der Querschnitt der Öffnung im Negativteil (14). Der im zweiten Trägerteil (44) angeordnete Abschnitt (49 a) der Durchgangsöffnung (49a, 49b) besitzt auf seiner dem ersten Trägerteil (43) zugewandten Seite einen sich auf das erste Trägerteil (43) zu konisch erweiternden Bereich (50). In dem im zweiten Trägerteil (44) angeordneten Abschnitt (49 a) der Durchgangsöffnung (49a, 49b) ist das topfförmig ausgebildete Negativteil (14) so angeordnet, daß es mit seiner verschlossenen Seite auf der dem ersten Trägerteil (43) abgewandten Seite des zweiten Trägerteiles (44) aus der Durchgangsöffnung (49a, 49b) herausragt. Das Negativteil (14) besitzt an seiner dem ersten Trägerteil (43) zugewandten offenen Seite einen Kragen (51), mit welchem es an dem konisch erweiterten Bereich (50) des Abschnitts (49 a) der Durchgangsöffnung (49a, 49b) anliegt. Der Kragen (51) verhindert ein Herausgleiten des Negativteiles (14) aus der Durchgangsöffnung (49a, 49b) in Richtung vom ersten Trägerteil (43) weg und das erste Trägerteil (43) verhindert nach dem Zusammenfügen von erstem Trägerteil (43) und zweitem Trägerteil (44) ein Herausgleiten des Negativteiles (14) aus der Durchgangsöffnung (49a, 49b) in Richtung auf das erste Trägerteil (43) zu. Im Negativteil (14) sind stab- oder blattförmige Federelemente (53) so angeordnet, daß sie in Richtung der Längsachse des Negativteiles (14) verlaufen und sich in Richtung auf die gedachte Mittelachse des Negativteiles (14) zu wölben.

Der Zusammenbau des das Einlaßventil (4) und das Auslaßventil (38) sowie die aus den Elektromagneten (7, 37) bestehende erste elektrische Einrichtung enthaltenden ersten Gehäuseteiles (3) mit dem die zweite elektrische Einrichtung (26) und den Drucksensor (21) enthaltenden zweiten Gehäuseteil (13) erfolgt in der Weise, daß das zweite Gehäuseteil (13), zum ersten Gehäuseteil (13) grob ausgerichtet und mit seiner offenen Seite der offenen Seite des ersten Gehäuseteiles (3) zugewandt, an das erste Gehäuseteil (3) herangebracht wird. Dabei kommen die Vorsprünge (9, 36) des ersten Gehäuseteiles (3) mit einem Teilbereich ihrer Mantelfläche mit den an diese angepaßten Bereichen der Innenwand des im zweiten Gehäuseteil (13) angeordneten Rahmens (18) in Kontakt. In dieser Phase des Zusammenbaues erfolgt ein selbsttätiges Ausrichten des ersten Gehäuseteiles (3) und des zweiten Gehäuseteiles (13) zueinander. Die als Steckerstifte ausgebildeten Positivteile (8, 10, 34, 35) und die trichterförmigen Einführungen (15, 17, 28, 30) der als Steckerbuchsen ausgebildeten Negativteile (14, 16, 27, 29) sowie die trichterförmige Einführung des zusätzlichen Druckmittelanschlusses (6) und der dieser zugeordnete Endbereich des Verbindungsteiles (25) stehen dann wenigstens annähernd lagegenau einander gegenüber. Bei der weiteren Bewegung des zweiten Gehäuseteiles (13) in Richtung auf das erste Gehäuseteil (3) zu tauchen die Positivteile (8, 10, 34, 35) selbsttätig in die Einführungen (15, 17, 28, 30) der ihnen zugeordneten Negativteile (14, 16, 27, 29) ein. Gleichzeitig taucht auch der freie Endbereich des Verbindungsteiles (25) selbsttätig in die Einführung des zusätzlichen Druckmittelanschlusses (6) ein. Auf diese Art und Weise erfolgt ein selbsttätiges Herstellen der elektrischen Steckverbindung und der Druckmittel-Steckverbindung.

Sollte ein Positivteil (8, 10, 34, 35) nicht genau dem ihm zugeordneten Negativteil (14, 16, 27, 29) oder sollte das Verbindungsteil (25) nicht genau der Einführung des zusätzlichen Druckmittelanschlusses (6) gegenüberstehen, wird bei der weiteren Bewegung des zweiten Gehäuseteiles (13) in Richtung auf das erste Gehäuseteil (3) zu das betroffene Positivteil (8, 10, 34, 35) bzw. das Verbindungsteil (25) von der diesem zugeordneten Einführung (15, 17, 28, 30) zu dem Negativteil (14, 16, 27, 29) bzw. zu dem zusätzlichen Druckmittelanschluss (6) hingeführt und tritt dann in das Negativteil (14, 16, 27, 29) bzw. in den Druckmittelanschluss (6) ein. Wenn dann das zweite Gehäuseteil (13) auf das erste Gehäuseteil (3) aufsetzt, sind die elektrische Steckverbindung und die Druckmittel-Steckverbindung hergestellt. Das erste Gehäuseteil (3) und das zweite Gehäuseteil (13) werden dann, z.B. mittels Schrauben, fest miteinander verbunden.

Die beim Auslenken des Positivteiles (8, 10, 34, 35) auftretenden Kräfte werden von dem die Einführung (15, 17, 28, 30) aufweisenden ersten Trägerteil (43) des Trägers (11, 33) für das Negativteil (14, 16, 27, 29) aufgenommen, von diesem auf das zweite Trägerteil (44) und von diesem auf das Negativteil (14, 16, 27, 29) und die Leiterplatte (31) übertragen. Die im Inneren des Negativteiles (14, 16, 27, 29) gelegenen stab- oder blattförmigen Federelemente (53) haben mit den Positivteilen (8, 10, 34, 35) einen sicheren Kontakt, werden jedoch nicht mit den auf das erste Trägerteil (43), das zweite Trägerteil (44), das topfförmige Negativteil (14, 16, 27, 29) und die Leiterplatte (31) einwirkenden Kräften belastet.

Selbstverständlich können die Positivteile (8, 10, 34, 35) auch an der im zweiten Gehäuseteil (13) angeordneten zweiten elektrischen Einrichtung (26) und die Negativteile (14, 16, 27, 29) mit den Einführungen (15, 17, 28, 30) an der im ersten Gehäuseteil (3) angeordneten ersten elektrischen Einrichtung angeordnet werden.

Wenigstens das eine Gehäuseteil (3 oder 13) kann als ein geschlossenes Gehäuse ausgebildet sein, aus welchem als Positivteile dienende Steckerstifte herausgeführt sind oder in dessen Wand als Negativteile dienende Buchsen mit Einführungen angeordnet sind. Das geschlossene Gehäuse und das einseitig offene Gehäuseteil oder die beiden für sich alleine geschlossenen Gehäuse oder auch zwei einseitig offene Gehäuseteile sind gemäß der Erfindung als zwei Gehäuseteile zu betrachten, die miteinander verbunden ein Gehäuse bilden.

Die Träger (11 und 33) für die Negativteile (14, 16, 27, 29) können gemäß der Erfindung auch Rast- oder Schnappmittel aufweisen, welche in entsprechende Ausnehmungen der Leiterplatte (31) einrasten oder einschnappen. Die Rast- oder Schnappmittel können auch an der Leiterplatte (31) angeordnet sein, wobei dann die Träger (11, 33) die entsprechenden Ausnehmungen aufweisen.

Durch die besondere Ausbildung und Anordnung der Träger (11, 33) und der an diesen angeordneten Negativteile (14, 16, 27, 29) und die besondere Ausbildung und Anordnung des Trägers (41) für den Drucksensor (21) an der Leiterplatte (31) lässt die Leiterplatte (31) sich von einer Seite her leicht bestücken. Das Herstellen der elektrischen Verbindung zwischen den Negativteilen (14, 16, 27, 29) und der auf der Leiterplatte (31) angeordneten gedruckten Schaltung sowie das Herstellen der elektrischen Verbindung zwischen dem elektrischen Teil des Drucksensors (21) und der gedruckten Schaltung kann auf einfache Art und Weise durch Löten mit der Lötwelle in einem einzigen Arbeitsgang erfolgen.

Jedes der als Negativteil (14, 16, 27, 29) ausgebildeten Kontaktelemente kann in Richtung seiner Längsachse so bemessen sein, daß es sich mit seinem aus dem Träger (11, 33) herausragenden Teil so weit in die ihm zugeordnete Durchgangsöffnung (52) in der Leiterplatte (31) hineinerstreckt, daß es mit seinem freien Endbereich auf der dem Träger (11, 33) abgewandten Seite der Leiterplatte (31) ein Stück aus der Durchgangsöffnung (52) herausragt, wie es im Ausführungsbeispiel beschrieben ist. Diese Ausführungsform ist besonders dann von Vorteil, wenn die Kontaktierung des Negativteiles (14, 16, 27, 29) mit der gedruckten Schaltung durch Löten mit der Lötwelle erfolgen soll.

Gemäß der Erfindung ist es jedoch auch möglich, jedes der Negativteile (14, 16, 27, 29) in Richtung seiner Längsachse so zu bemessen, daß es sich mit seinem aus dem Träger (11, 33) herausragenden Teil nur so weit in die ihm zugeordnete Durchgangsöffnung (52) in der Leiterplatte (31) hineinerstreckt, daß sich sein freier Endbereich noch innerhalb der Durchgangsöffnung befindet.

Die Kontaktierung der Negativteile mit der gedruckten Schaltung kann dann mittels eines anderen geeigneten Lötverfahrens oder mittels anderer geeigneter mechanischer Mittel erfolgen.

Ebenso können die elektrischen Kontaktelemente (20, 22) des Drucksensors (21) in Richtung ihrer Längsachse so bemessen werden, daß sich ihre freien Endbereiche entweder noch innerhalb der ihnen zugeordneten Öffnungen (54, 55) in der Leiterplatte (31) befinden oder auf der dem Drucksensor (21) abgewandten Seite der Leiterplatte (31) ein Stück aus den Öffnungen (54, 55) herausragen.

Durch die Lötverbindung werden die als Negativteile (14, 16, 27, 29) ausgebildeten Kontaktelemente mit ihren Trägern (11, 33) und auch der Drucksensor (21) mit seinem Träger (41) an dem als Leiterplatte (31) ausgebildeten plattenartigen Bauteil gehalten.

Die elektrischen Kontaktelemente (20, 22) des Drucksensors (21) können gemäß der Erfindung auch in die Anformungen (23, 24) des Trägers (41) für den Drucksensor (21) integriert sein, z.B. in der Weise, daß sie durch kanalartige Öffnungen in den Anformungen (23, 24) des Trägers (41) hindurchgeführt werden.

Gemäß der Erfindung können an dem Träger (41) und/oder an dem als Leiterplatte (31) ausgebildeten plattenartigen Bauteil Schnapp- oder Rastverbindungsmittel angeordnet sein, die zum Verbinden des Trägers (41) mit der Leiterplatte (31) dienen. Zu diesem Zweck kann an jeder der Anformungen (23, 24) ein Fortsatz angeordnet sein, der sich durch eine ihm zugeordnete Öffnung in der Leiterplatte (31) hindurcherstreckt. Der Fortsatz kann z.B. durch Abstufen des freien Endbereiches der Anformung gebildet werden. An dem freien Ende des Fortsatzes kann ein quer zur Längsachse des Fortsatzes verlaufender nasenartiger Vorsprung angeordnet sein, welcher dann nach dem Zusammenfügen von Leiterplatte (31) und Träger (41) den die Öffnung in der Leiterplatte (31) begrenzenden Bereich der Leiterplatte (31) übergreift.

## Patentansprüche

1. Steuereinrichtung für Druckmittel, mit folgenden Merkmalen:
a) es ist eine in einem ersten Gehäuseteil (3) angeordnete steuerbare Ventileinrichtung (4, 38) vorgesehen, die mit einer im ersten Gehäuseteil (3) angeordneten ersten elektrischen Einrichtung (7, 37) in Wirkverbindung steht;
b) es ist eine in einem zweiten Gehäuseteil (13) angeordnete zweite elektrische Einrichtung (26) zum Steuern der steuerbaren Ventileinrichtung (4, 38) vorgesehen;
c) das erste Gehäuseteil (3) und das zweite Gehäuseteil (13) sind miteinander verbindbar;
d) die eine elektrische Einrichtung (26) weist ein plattenartiges Bauteil (31) auf;
e) an der jeweils einen elektrischen Einrichtung (26) ist wenigstens ein als Negativteil (14, 16, 27, 29) ausgebildetes elektrisches Kontaktelement angeordnet und an der jeweils anderen elektrischen Einrichtung (7, 37) ist dem wenigstens einen Negativteil (14, 16, 27, 29) gegenüber wenigstens ein als Positivteil (8, 10, 34, 35) ausgebildetes elektrisches Kontaktelement angeordnet;
f) das Negativteil (14, 16, 27, 29) und das Positivteil (8, 10, 34, 35) sind so ausgebildet und so an den ihnen zugeordneten elektrischen Einrichtungen (26, 7, 37) angeordnet, daß sie nach dem Zusammenfügen der beiden Gehäuseteile (3, 13) zusammen eine elektrische Steckverbindung (14, 16, 27, 29, 8, 10, 34, 35) bilden;
**gekennzeichnet durch** die folgenden Merkmale:
g) es ist ein Träger (11, 33) für das Negativteil (14, 16, 27, 29) vorgesehen, der eine Durchgangsöffnung (49a, 49b) zur Aufnahme des Negativteiles (14, 16, 27, 29) aufweist;
h) der Träger (11, 33) für das Negativteil (14, 16, 27, 29) ist auf der Seite des plattenartigen Bauteiles (31) am plattenartigen Bauteil (31) angeordnet, welche dem Positivteil (8, 10, 34, 35) zugewandt ist;
i) der Träger (11, 33) ist so am plattenartigen Bauteil (31) angeordnet, daß seine Durchgangsöffnung (49a, 49b) im wesentlichen gleichachsig zu einer im plattenartigen Bauteil (31) angeordneten Durchgangsöffnung (52) verläuft;
k) das Negativteil (14, 16, 27, 29) ist in der Durchgangsöffnung (49a, 49b) des Trägers (11, 33) so angeordnet und in Richtung seiner Längsachse so bemessen, daß es sich mit seinem aus dem Träger (11, 33) herausragenden Teil in die im plattenartigen Bauteil (31) angeordnete Durchgangsöffnung (52) hineinerstreckt oder **durch** diese hindurcherstreckt.

2. Steuereinrichtung nach Anspruch 1, **dadurch gekennzeichnet, daß** das Negativteil (14, 16, 27, 29) in Richtung seiner Längsachse so bemessen ist, daß es sich mit seinem aus dem Träger (11, 33) herausragenden Teil durch die Durchgangsöffnung (52) in dem plattenartigen Bauteil (31) hindurcherstreckt, so weit, daß es mit seinem freien Endbereich auf der dem Träger (11, 33) abgewandten Seite des plattenartigen Bauteiles (31) aus der Durchgangsöffnung (52) des plattenartigen Bauteiles (31) herausragt.

3. Steuereinrichtung nach wenigstens einem der vorhergehenden Ansprüche, **dadurch gekennzeichnet, daß** die im Träger (11, 33) angeordnete Durchgangsöffnung (49a, 49b) einen Abschnitt (49b) aufweist, der sich in Richtung auf das dieser Durchgangsöffnung (49a, 49b) zugeordnete Positivteil (8, 10, 34, 35) zu trichterförmig erweitert, wobei der die trichterförmige Erweiterung aufweisende Abschnitt der Durchgangsöffnung (49a, 49b) als Einführung (15, 17, 28, 30) für das Positivteil (8, 10, 34, 35) dient.

4. Steuereinrichtung nach wenigstens einem der vorhergehenden Ansprüche, **gekennzeichnet durch** die folgenden Merkmale:
a) der Träger (11, 33) für das Negativteil (14, 16, 27, 29) ist quer zur Längsachse des Negativteiles (14, 16, 27, 29) geteilt ausgebildet, wobei das eine Teil als ein erstes Trägerteil (43) und das andere Teil als ein zweites Trägerteil (44) dient;
b) die Durchgangsöffnung (49a, 49b) ist in einen im zweiten Trägerteil (44) angeordneten ersten Abschnitt (49 a) und einen im ersten Trägerteil (43) angeordneten zweiten Abschnitt (49 b) der Durchgangsöffnung (49a, 49b) unterteilt, wobei der erste Abschnitt (49a) und der zweite Abschnitt (49b) gleichachsig zueinander angeordnet sind;
c) das Negativteil (14, 16, 27, 29) ist im ersten Abschnitt (49 a) der Durchgangsöffnung (49a, 49b) angeordnet;
d) die als Einführung (15, 17, 28, 30) dienende trichterförmige Erweiterung ist in dem Bereich des zweiten Abschnitts (49 b) der Durchgangsöffnung 49a, 49b) angeordnet, welcher sich auf der dem zweiten Trägerteil (44) abgewandten Seite des ersten Trägerteiles (43) befindet;
e) der Durchlassquerschnitt der trichterförmigen Einführung (15, 17, 28, 30) ist an seiner engsten Stelle gleich dem oder kleiner als der Querschnitt der Öffnung im Negativteil (14, 16, 27, 29);
f) am ersten Trägerteil (43) und/oder am zweiten Trägerteil (44) sind Rast- oder Schnappmittel (45, 46, 47, 48) angeordnet, mittels welcher das erste Trägerteil (43) und das zweite Trägerteil (44) miteinander verbindbar sind.

5. Steuereinrichtung nach Anspruch 4, **dadurch gekennzeichnet, daß** die Rast- oder Schnappmittel (45, 46, 47, 48) von am ersten Trägerteil (43) und/oder von am zweiten Trägerteil (44) angeordneten zungenartigen Anformungen (45, 46) und von am zweiten Trägerteil (44) und/oder von am ersten Trägerteil (43) angeordneten Ausnehmungen (47, 48) gebildet werden, wobei an jeder der zungenartigen Anformungen (45, 46) ein Vorsprung angeordnet ist, welcher in die ihm zugeordnete Ausnehmung (47, 48) eingreift, wenn beim Zusammenfügen von erstem Trägerteil (43) und zweitem Trägerteil (44) das erste Trägerteil (43) und das zweite Trägerteil (44) mit ihren einander zugewandten Seiten aneinander zur Anlage kommen.

6. Steuereinrichtung nach wenigstens einem der vorhergehenden Ansprüche, **dadurch gekennzeichnet, daß** im Negativteil (14, 16, 27, 29) Federelemente (53) angeordnet sind, derart, daß sie in Richtung der Längsachse des Negativteiles (14, 16, 27, 29) verlaufen und in Richtung zu einer gedachten Mittelachse des Negativteiles (14, 16, 27, 29) hin gewölbt sind.

7. Steuereinrichtung nach wenigstens einem der vorhergehenden Ansprüche, **dadurch gekennzeichnet, daß** der Träger (11, 33) für das Negativteil (14, 16, 27, 29) mittels Rast- oder Schnappmitteln mit dem plattenartigen Bauteil (31) lösbar verbunden ist.

8. Steuereinrichtung nach Anspruch 1, **gekennzeichnet durch** die folgenden Merkmale:
a) an dem plattenartigen Bauteil (31) der zweiten elektrischen Einrichtung (26) ist ein Drucksensor (21) angeordnet, welcher über eine Druckmittel-Steckverbindung (25, 6) mit einem im ersten Gehäuseteil (3) angeordneten Druckmittelanschluß (6) verbunden ist;
b) der Drucksensor (21) ist auf einem Träger (41) angeordnet, der auf der dem ersten Gehäuseteil (3) zugewandten Seite des plattenartigen Bauteiles (31) angeordnet ist;
c) der Träger (41) besitzt Anformungen (23, 24), die im wesentlichen in Richtung der Längsachse des Trägers (41) und des Drucksensors (22) verlaufen und sich in Richtung auf das plattenartige Bauteil (31) zuerstrecken;
d) die Anformungen (23, 24) dienen zum Abstützen des Trägers (41) an dem plattenartigen Bauteil (31);
e) am Träger (41) sind mit einem elektrischen Teil des Drucksensors (21) verbundene elektrische Kontaktelemente (20, 22) zum elektrischen Verbinden des Drucksensors (21) mit der zweiten elektrischen Einrichtung (26) angeordnet;
f) jedes der Kontaktelemente (20, 22) erstreckt sich in Richtung auf das plattenartige Bauteil (31) zu und ist in Richtung seiner Längsachse so bemessen, daß es sich in eine ihm zugeordnete Öffnung (54, 55) in dem plattenartigen Bauteil (31) hineinerstreckt oder sich **durch** dieses hindurcherstreckt.

9. Steuereinrichtung nach Anspruch 8, **dadurch gekennzeichnet, daß** jedes der Kontaktelemente (20, 22) in Richtung seiner Längsachse so bemessen ist, daß es mit seinem freien Endbereich auf der dem Drucksensor (21) abgewandten Seite des plattenartigen Bauteiles (31) ein Stück aus der Öffnung (54, 55) herausragt.

10. Steuereinrichtung nach wenigstens einem der Ansprüche 8 oder 9, **dadurch gekennzeichnet, daß** die elektrischen Kontaktelemente (20, 22) in die Anformungen (23, 24) integriert sind.

11. Steuereinrichtung nach wenigstens einem der vorhergehenden Ansprüche 8, 9 oder 10, **dadurch gekennzeichnet, daß** an dem Träger (41) und/oder an dem plattenartigen Bauteil (31) Schnapp- oder Rastverbindungsmittel angeordnet sind, die zum Verbinden des Trägers (41) mit dem plattenartigen Bauteil (31) dienen.

12. Steuereinrichtung nach wenigstens einem der vorhergehenden Ansprüche 8, 9 oder 10, **gekennzeichnet durch** die folgenden Merkmale:
a) jede der Anformungen (23, 24) weist einen Fortsatz auf, der sich **durch** eine ihm zugeordnete Öffnung im plattenartigen Bauteil (31) hindurcherstreckt;
b) der Fortsatz weist an seinem freien Endbereich einen quer zu seiner Längsachse verlaufenden nasenartigen Vorsprung auf, welcher den die Öffnung begrenzenden Bereich des plattenartigen Bauteiles (31) nach dem Zusammenfügen von Träger (41) und plattenartigem Bauteil (31) übergreift und so eine Schnappverbindung zwischen dem plattenartigen Bauteil (31) und dem Träger (41) für den Drucksensor (21) herstellt.

13. Steuereinrichtung nach wenigstens einem der vorhergehenden Ansprüche, **dadurch gekennzeichnet, daß** das plattenartige Bauteil (31) der einen elektrischen Einrichtung (26) als Leiterplatte ausgebildet ist, die im zweiten Gehäuseteil (13) angeordnet ist.

## Claims

1. A control device for pressure medium, having the following features:
a) in a first housing part (3) there is provided a controllable valve arrangement (4, 38), which is in operative connection with a first electrical device (7, 37) arranged in the first housing part (3);
b) a second electrical device (26) arranged in a second housing part (13) is provided for controlling the controllable valve arrangement (4, 38);
c) the first housing part (3) and the second housing part (13) are connectible with one another;
d) the one electrical device (26) comprises a plate-like component (31);
e) at least one electrical contact element in the form of a female part (14, 16, 27, 29) is arranged on the one electrical device (26) and on the respective other electrical device (7, 37) there is arranged opposite the at least one female part (14, 16, 27, 29) at least one electrical contact element in the form of a male part (8, 10, 34, 35);
f) the female part (14, 16, 27, 29) and the male part (8, 10, 34, 35) are constructed and arranged on their associated electrical devices (26, 7, 37) so that they form an electrical plug-and-socket connection (14, 16, 27, 29, 8, 10, 34, 35) after the two housing parts (3, 13) have been joined together;
**characterised by** the following features:
g) a carrier (11, 33) for the female part (14,16, 27, 29) is provided, which comprises a through-opening (49a, 49b) for receiving the female part (14, 16, 27, 29);
h) the carrier (11, 33) for the female part (14, 16, 27, 29) is arranged on the plate-like component (31) on the side of the plate-like component (31) facing towards the male part (8, 10, 34, 35);
i) the carrier (11, 33) is arranged on the plate-like component (31) so that its through-opening (49a, 49b) runs approximately coaxial with a through-opening (52) arranged in the plate-like component (31);
k) the female part (14, 16, 27, 29) is arranged in the through-opening (49a, 49b) of the carrier (11, 33) and is dimensioned in the direction of its longitudinal axis so that with its part projecting from the carrier (11, 33) it extends into or right through the through-opening (52) arranged in the plate-like component (31).

2. A control device according to claim 1, **characterised in that** the female part (14, 16, 27, 29) is dimensioned in the direction of its longitudinal axis so that with its part projecting from the carrier (11, 33) it extends right through the through-opening (52) in the plate-like component (31) and so far that on the side of the plate-like component (31) remote from the carrier (11, 33) it projects with its free end region out of the through-opening (52) of the plate-like component (31).

3. A control device according to at least one of the preceding claims, **characterised in that** the through-opening (49a, 49b) arranged in the carrier (11, 33) comprises a portion (49b) that widens in the shape of a funnel towards the male part (8, 10, 34, 35) associated with this through-opening (49a, 49b), the portion of the through-opening (49a, 49b) having the funnel-shaped widening serving as entry (15, 17, 28, 30) for the male part (8, 10, 34, 35).

4. A control device according to at least one of the preceding claims, **characterised by** the following features:
a) the carrier (11, 33) for the female part (14, 16, 27, 29) is of divided construction transverse to the longitudinal axis of the female part (14, 16, 27, 29), the one part serving as a first carrier part (43) and the other part serving as a second carrier part (44);
b) the through-opening (49a, 49b) is divided into a first portion (49a) arranged in the second carrier part (44) and a second portion (49b) arranged in the first carrier part (43), the first portion (49a) and the second portion (49b) being arranged coaxially with respect to one another;
c) the female part (14, 16, 27, 29) is arranged in the first portion (49a) of the through-opening (49a, 49b);
d) the funnel-shaped widening serving as entry (15, 17, 28, 30) is arranged in the region of the second portion (49b) of the through-opening (49a, 49b) that is located on the side of the first carrier part (43) remote from the second carrier part (44);
e) the opening cross-section of the funnel-shaped entry (15,17, 28, 30) at its narrowest point is the same as or smaller than the cross-section of the opening in the female part (14, 16, 27, 29);
f) on the first carrier part (43) and/or on the second carrier part (44) there are arranged locking or snap-in means (45, 46, 47, 48), by means of which the first carrier part (43) and the second carrier part (44) are connectible with one another.

5. A control device according to claim 4, **characterised in that** the locking or snap-in means (45, 46, 47, 48) are formed by tongue-like mouldings (45, 46) arranged on the first carrier part (43) and/or on the second carrier part (44) and by mouldings (47, 48) arranged on the second carrier part (44) and/or on the first carrier part (43), wherein on each of the tongue-like mouldings (45, 46) there is arranged a projection that engages in the recess (47, 48) associated with it when the facing sides of the first carrier part (43) and the second carrier part (44) come into contact when the first carrier part (43) and the second carrier part (44) are joined together.

6. A control device according to at least one of the preceding claims, **characterised in that** spring elements (53) are arranged in the female part (14, 16, 27, 29) in such a way that they run in the direction of the longitudinal axis of the female part (14, 16, 27, 29) and are bowed towards a notional centre line of the female part (14, 16, 27, 29).

7. A control device according to at least one of the preceding claims, **characterised in that** the carrier (11, 33) for the female part (14, 16, 27, 29) is releasably connected by means of locking or snap-in means with the plate-like component (31).

8. A control device according to claim 1, **characterised by** the following features:
a) a pressure sensor (21) that is connected by way of a pressure medium plug-and-socket connection (25, 6) to a pressure medium connection (6) arranged in the first housing part (3) is arranged on the plate-like component (31) of the second electrical device (26);
b) the pressure sensor (21) is arranged on a carrier (41) which is arranged on the side of the plate-like component (31) facing the first housing part (3);
c) the carrier (41) has mouldings (23, 24) which run substantially in the direction of the longitudinal axis of the carrier (41) and of the pressure sensor (21) and extend towards the plate-like component (31);
d) the mouldings (23, 24) serve for support of the carrier (41) on the plate-like component (31);
e) electrical contact elements (20, 22) connected with an electrical part of the pressure sensor (21) for electrical connection of the pressure sensor (21) with the second electrical device (26) are arranged on the carrier (41);
f) each of the contact elements (20, 22) extends towards the plate-like component (31) and is dimensioned in the direction of its longitudinal axis so that it extends into or right through an associated opening (54, 55) in the plate-like component (31);

9. A control device according to claim 8, **characterised in that** each of the contact elements (20, 22) is dimensioned in the direction of its longitudinal axis so that on the side of the plate-like component (31) remote from the pressure sensor (21) it projects with its free end region a little way out of the opening (54, 55).

10. A control device according to at least one of claims 8 or 9, **characterised in that** the electrical contact elements (20, 22) are integrated in the mouldings (23, 24).

11. A control device according to at least one of the preceding claims 8, 9 or 10, **characterised in that** snap-in or locking connection means that serve for connection of the carrier (41) with the plate-like component (31) are arranged on the carrier (41) and/or on the plate-like component (31).

12. A control device according to at least one of the preceding claims 8, 9 or 10, **characterised by** the following features:
a) each of the mouldings (23, 24) has an extension that extends right through an opening associated therewith in the plate-like component (31);
b) at its free end region the extension has a nose-like projection running transverse to its longitudinal axis, which projection, after joining together of the carrier (41) and the plate-like component (31), engages over the region of the plate-like component (31) defining the opening and thus produces a snap connection between the plate-like component (31) and the carrier (41) for the pressure sensor (21).

13. A control device according to at least one of the preceding claims, **characterised in that** the plate-like component (31) of the one electrical device (26) is in the form of a printed circuit board that is arranged in the second housing part (13).

## Revendications

1. Dispositif de commande pour fluide sous pression présentant les caractéristiques suivantes:
a) il est prévu un dispositif à soupapes commandable (4, 38) disposé dans une première partie de boîtier (3) et relié selon une liaison motrice à un premier dispositif électrique (7, 37) disposé dans la première partie (3) du boîtier;
b) il est prévu un second dispositif électrique (26) disposé dans une seconde partie (13) du boîtier et servant à commander le dispositif à soupapes commandable (4, 38);
c) la première partie (3) du boîtier et la seconde partie (13) du boîtier peuvent être reliées entre elles;
d) un dispositif électrique (26) comporte un composant en forme de plaque (31);
e) sur le respectivement un dispositif électrique (26) est disposé au moins un élément de contact électrique, agencé sous la forme d'une partie en creux (14, 16, 27, 29), et sur l'autre dispositif électrique respectif (7, 37) est disposé, en vis-à-vis d'au moins une partie en creux (14, 16, 27, 29), au moins un élément de contact électrique agencé sous la forme d'une partie saillante (8, 10, 34, 35);
f) la partie en creux (14, 16, 27, 29) et la partie saillante (8, 10, 34, 35) sont agencées et disposées sur les dispositifs électriques (26, 7, 37) qui leur sont associés, de telle sorte qu'elles forment conjointement une liaison électrique à enfichage (14, 16, 27, 29, 8, 10, 34, 35) après la réunion des deux parties (3, 13) du boîtier entre elles;
**caractérisé par** les caractéristiques suivantes:
g) il est prévu un support (11, 33) pour la partie en creux (14, 16, 27, 29), qui comporte une ouverture de passage (49a, 49b) pour loger la partie en creux (14, 16, 27, 29) ;
h) le support (11, 31) pour la partie en creux (14, 16, 27, 29) est disposé du côté du composant en forme de plaque (31), qui est tourné vers la partie saillante (8, 10, 34, 35);
i) le support (11, 33) est disposé sur le composant en forme de plaque (31) de telle sorte que son ouverture de passage (49a, 49b) s'étend essentiellement en étant coaxial à une ouverture de passage (52) disposée dans le composant en forme de plaque (31);
k) la partie en creux (14, 16, 27, 29) est disposée dans l'ouverture de passage (49a, 49b) du support (11, 33) et dimensionnée dans la direction de son axe longitudinal de telle sorte qu'elle pénètre par sa partie qui fait saillie, hors du support (11, 33), dans l'ouverture de passage (52), qui est formée dans le composant en forme de plaque (31), ou traverse cette ouverture.

2. Dispositif de commande selon la revendication 1, **caractérisé en ce que** la partie en creux (14, 16, 27, 29) est dimensionnée dans la direction de son axe longitudinal de telle sorte qu'elle traverse, par sa partie qui ressort hors du support (11, 33), dans l'ouverture de passage (51) formée dans le composant en forme de plaque (31) au point qu'avec sa partie d'extrémité libre elle fait saillie, sur le côté du composant en forme de plaque (31) tourné à l'opposé du support (11, 33), hors de l'ouverture de passage (52) du composant en forme de plaque (31).

3. Dispositif de commande selon l'une des revendications précédentes, **caractérisé en ce que** l'ouverture de passage (49a, 49b), qui est formée dans le support (11, 33), possède une partie (49b) qui s'élargit en forme d'entonnoir en direction de la partie saillante (11, 18, 34, 35) associée à cette ouverture de passage (49a, 49b), la section, qui possède l'élargissement en forme d'entonnoir, de l'ouverture de passage (49a, 49b) étant utilisée en tant qu'entrée (15, 17, 28, 30) pour la partie saillante (8, 10, 34, 35).

4. Dispositif de commande selon l'une des revendications précédentes, **caractérisé par** les caractéristiques suivantes:
a) le support (11, 33) pour la partie en creux (14, 16, 27, 29) est agencé en étant divisé transversalement par rapport à l'axe longitudinal de la partie en creux (14, 16, 27, 29), une partie servant de première partie de support (43) et l'autre partie servant de seconde partie de support (44);
b) l'ouverture de passage (49a, 49b) étant divisée en une première section (49a), qui est disposée dans la seconde partie de support (44), et une seconde section (49b), qui est disposée dans la première partie de support (43), de l'ouverture de passage (49a, 49b), la première section (49a) et la seconde section (49b) étant disposées en étant coaxiales;
c) la partie en creux (14, 16, 27, 29) est disposée dans la première section (49a) de l'ouverture de passage (49a, 49b);
d) l'élargissement en forme d'entonnoir utilisé en tant qu'entrée (15, 17, 28, 30) est disposé dans la zone de la seconde section (49b) de l'ouverture de passage (49a, 49b), qui est située sur le côté, tourné à l'opposé de la seconde partie de support (44), de la première partie de support (43);
e) la section transversale de passage de l'entrée en forme d'entonnoir (15, 17, 28, 30) est, au niveau de son point le plus étroit, égale ou inférieure à la section transversale de l'ouverture formée dans la partie en creux (14, 16, 27, 29);
f) sur la première partie de support (43) et/ou sur la seconde partie de support (44) sont disposés des moyens d'encliquetage ou à déclic (45, 46, 47, 48), à l'aide desquels la première partie de support (43) et la seconde partie de support (44) peuvent être reliées entre elles.

5. Dispositif de commande selon la revendication 4, **caractérisé en ce que** les moyens d'encliquetage ou à déclic (45, 46, 47, 48) sont formés par des parties conformées en forme de languettes (45, 46), disposées sur la première partie de support (43) et/ou sur la seconde partie de support (44), et par des évidements (47, 48) disposés sur la seconde partie de support (44) et/ou sur la première partie de support (43), et dans lequel sur chacune des parties conformées en forme de languettes (45, 46) est disposée une partie saillante, qui s'engage dans l'évidement (47, 48) qui lui est associé, lors de la réunion de la première partie de support (43) et de la seconde partie de support (44), la première partie de support (43) et la seconde partie de support (44) viennent s'appliquer l'une contre l'autre par leurs côtés qui se font face.

6. Dispositif de commande selon au moins l'une des revendications précédentes, **caractérisé en ce que** des éléments de ressorts (53) sont disposés dans la partie en creux (14, 16, 27, 29), de telle sorte qu'ils s'étendent dans la direction de l'axe longitudinal de la partie en creux (14, 16, 27, 29) et sont cintrés en direction d'un axe médian imaginaire de la partie en creux (14, 16, 27, 29).

7. Dispositif de commande selon au moins l'une des revendications précédentes, **caractérisé en ce que** le support (11, 33) pour la partie en creux (14, 18, 27, 29) est relié de façon amovible au composant en forme de plaque (31) par l'intermédiaire de moyens d'encliquetage ou à déclic.

8. Dispositif de commande selon la revendication 1, **caractérisé par** les caractéristiques suivantes:
a) sur le composant en forme de plaque (31) du second dispositif électrique (26) est disposé un capteur de pression (21), qui est relié, par l'intermédiaire d'une liaison à enfichage pour fluide sous pression (25, 6), à un raccord pour fluide sous pression (6) disposé dans la première partie (3) du boîtier;
b) le capteur de pression (21) est disposé sur un support (41), qui est disposé sur le côté, tourné vers la première partie (3) du boîtier, du composant en forme de plaque (31);
c) le support (41) possède des parties conformées (23, 24) qui s'étendent essentiellement dans la direction de l'axe longitudinal du support (41) et du capteur de pression (22) et s'étendent en direction du composant en forme de plaque (31);
d) les parties conformées (23, 24) sont utilisées pour supporter le support (41) sur le composant en forme de plaque (31);
e) sur le support (41) sont disposés des éléments de contact électriques (20, 22), qui sont reliés à une partie électrique du capteur de pression (21) et servent à établir une liaison électrique entre le capteur de pression (21) et le second dispositif électrique (26);
f) chacun des éléments de contact (20, 22) s'étend en direction du composant en forme de plaque (31) et est dimensionné dans la direction de son axe longitudinal de telle sorte qu'il s'étend dans une ouverture (54, 55), qui lui est associée et est formée dans le composant en forme de plaque (31), ou traverse ce composant.

9. Dispositif de commande selon la revendication 8, **caractérisé en ce que** chacun des éléments de contact (20, 22) est dimensionné dans la direction de son axe longitudinal de telle sorte qu'il fait saillie légèrement hors de l'ouverture (54, 55) par sa partie d'extrémité libre, sur le côté du composant en forme de plaque (31) situé à l'opposé du capteur de pression (21).

10. Dispositif de commande selon au moins l'une des revendications 8 ou 9, **caractérisé en ce que** les éléments de contact (20, 22) sont intégrés dans les parties conformées (23, 24).

11. Dispositif de commande selon au moins l'une des revendications précédentes 8, 9 ou 10, **caractérisé en ce que** sur le support (41) et/ou sur le composant en forme de plaque (31) sont disposés des moyens de liaison à déclic ou par encliquetage, qui sont utilisés pour relier le support (41) au composant en forme de plaque (31).

12. Dispositif de commande selon au moins l'une des revendications précédentes 8, 9 ou 10, **caractérisé par** les caractéristiques suivantes:
a) chacune des parties conformées (23, 24) comporte un prolongement qui s'étend à travers une ouverture, qui lui est associée et est formée dans le composant en forme de plaque (31);
b) le prolongement possède, sur sa partie d'extrémité libre, une partie saillante en forme de nez qui s'étend transversalement par rapport à son axe longitudinal et qui s'engage par dessus la zone, qui délimite l'ouverture, du composant en forme de plaque (31) après assemblage de support (41) et du composant en forme de plaque (31), et établit ainsi une liaison à encliquetage entre le composant en forme de plaque (31) et le support (41) pour le capteur de pression (21).

13. Dispositif de commande selon au moins l'une des revendications précédentes, **caractérisé en ce que** le composant en forme de plaque (31) d'un dispositif électrique (26) est agencé sous la forme d'une plaquette à circuits imprimés, qui est disposé dans la seconde partie (13) du boîtier.
